(19) Europäisches Patentamt
European Patent Office
Office européen des brevets

(11) **EP 3 322 204 B1**

(12) **EUROPEAN PATENT SPECIFICATION**

(45) Date of publication and mention
of the grant of the patent:
**13.03.2019 Bulletin 2019/11**

(51) Int Cl.:
***H04W 4/40*** *(2018.01)*

(21) Application number: **16198336.6**

(22) Date of filing: **11.11.2016**

(54) **DRIVER ASSISTANCE SYSTEM AND METHOD**

FAHRHILFESYSTEME UND VERFAHREN

SYSTÈME D'ASSISTANCE AU CONDUCTEUR ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.05.2018 Bulletin 2018/20**

(73) Proprietor: **Bayerische Motoren Werke Aktiengesellschaft 80809 München (DE)**

(72) Inventors:
- **Gozalvez Serrano, Dr. David 80636 München (DE)**
- **Arendt, Christian 81547 München (DE)**
- **Pollakis, Emmanuel 81827 München (DE)**

(56) References cited:
**US-B1- 8 676 431     US-B2- 9 057 620
US-B2- 9 285 229**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a driver assistance system and method for improving the availability and reliability in vehicles operating in an autonomous driving mode.

Vehicles comprising/supporting an autonomous driving mode for (at least in part) autonomously transporting passengers form one location to another are known. However, the autonomous driving mode is not available in a fully automated manner. Some vehicles require periodic input from an operator, e.g. a driver or passenger, whereas other vehicles and/or the driver of the vehicle may switch from a manual to an autonomous mode and vice versa, whenever applicable and/or allowable.

In order to realize an autonomous driving mode in vehicles, the retrieval and processing of detailed map data is of crucial importance. Conventionally, maps are e.g. downloaded and stored in a memory unit located in the vehicle and retrieved from the memory unit, e.g. by the navigation system, whenever applicable. However, such maps and map data/information is static and unfrequently updated such that it is inappropriate for providing the availability and reliability for highly autonomous driving modes.

Moreover, downloading necessary, up to date and reliable map data "on demand" via a mobile communication network is unreliable since it is known that no mobile communication network provides full network coverage over the transport/traffic infrastructure. Therefore, it cannot be guaranteed that relevant and up-to-date map data is downloaded to the vehicle in time for autonomous driving. Moreover, an achievable data rate per user in mobile communication networks significantly depends on the number of active users logged into a mobile communication network's cell and the amount of the cell's resources used by each of the users. Accordingly, when a large number of users is logged into one cell, each of the users using resources of the mobile phone cell, the overall resource pool of the cell can be depleted. Further, due to interference and poor signal levels, packet errors can occur resulting in poor quality of services in the cells, increasing the latency and limiting the end-to-end performance in the respective cells.

Mobile vehicles cannot anticipate the presence of mobile network coverage gaps, poor mobile phone cell performance and/or interference. Further, vehicles continuously and rapidly change their location and are therefore confronted with significant variations in available Quality of Service (QoS). Therefore, vehicles cannot guarantee the download of up-to-date map data necessary for an autonomous driving mode. Moreover, vehicles are not be able to obtain any knowledge about the above-mentioned further relevant factors impacting the performance of cells. As a consequence, the availability and reliability of autonomous driving modes cannot be ensured. Therefore, whenever a download of relevant map data/information or the transmission of a track approval fails, the vehicle has to switch from an autonomous mode to a conventional human driving mode, i.e. the driver, needs to manually continue driving.

US 9,057,620 B2 describes a mobile device, which can obtain wireless network signal strength map data that indicates, for various nearby geographical regions, the wireless network signal strength in each such region. The mobile device can transmit that data to a vehicular navigation system responsible for automatically selecting a high-quality route of vehicular travel between a specified source and destination. The system can take the wireless network signal map data into account when selecting that route. When selecting from among multiple different routes of vehicular travel between a specified source and destination, the system may employ an algorithm that considers wireless network signal strengths along those routes, in addition to the other factors. Consequently, the system can select a longer route having better signal strength over a shorter route having worse signal strength. The system can present the selected route within a set of suggested routes, potentially along with reasons for each route's suggestion. The document is silent with respect to autonomous vehicles operating in an autonomous driving mode. The document is further silent with respect to map data being downloaded to the vehicle from a backend server depending on a position of the autonomous vehicle. The document is further silent with respect to a vehicle having a control module operable to control the vehicle in autonomous driving mode based on the downloaded map data.

It is an object of the present invention to overcome the above-mentioned drawbacks by improving the availability and reliability of autonomous driving modes of vehicles.

This problem is solved by the independent claims. Preferred embodiments are described in the dependent claims.

According to a first aspect, a driver assistance system for improving the availability and reliability in vehicles operating in an autonomous driving mode is provided. The driver assistance system comprises:

    at least one backend-server, the backend-server comprising:

        - a Quality of Service, QoS, map module operable to maintain at least one up-to-date QoS map for at least one mobile network operator, MNO; and
        - a scheduling module operable to schedule appropriate map data downloads to the vehicle; and

    at least one vehicle, the vehicle comprising

        - a transmission module operable to:

- transmit driving data to the backend-server in predefined time intervals, the driving data comprising current positioning data of the vehicle;
- receive, from the scheduling module the appropriate map data, wherein the scheduling module schedules the appropriate map data downloads based on the transmitted driving data; and

- a control module operable to control the vehicle in the autonomous driving mode based on the appropriate map data.

As outlined above, the autonomous driving mode may be an autonomous driving mode for (at least in part) autonomously transporting passengers in a vehicle form one location to another.

An achievable Quality of Service (QoS) map may be an up-to-date QoS/coverage map for Wireless Wide Area Networks (WWANs), e.g. mobile networks (3G, HSDPA, WiMAX, etc.) in view of network parameters comprising one or more of: bandwidth, latency, throughput, availability, transmission delay, jitter, bit rate, error rates, etc. In the following, the network parameters will also be referred to as QoS parameters. Conventional WWAN coverage maps (e.g. coverage maps published by mobile network operators (MNOs)/mobile network providers) are not stable and the WWAN achievable QoS parameters hence cannot be guaranteed. Rather, and in particular in the fast moving vehicular environment, users are confronted with significant fluctuations of QoS parameters in view of conventional WWAN coverage maps. It has been discovered that for WWAN QoS parameters, a Past Tells More Than Present (PPMTP) property holds. The PPMT property means that a summary (e.g. a mean value) of past QoS parameter measurements/observations at an actual location is a good indicator of the actual QoS parameters experienced at the actual location. This holds in particular true as compared to QoS parameters, e.g. a throughput at e.g. a location previous to the actual location along the route being a bad indicator of the actual throughput experienced at the actual location. In other words, past QoS parameter knowledge in particular locations allow foreseeing actual QoS parameter experience in said particular locations. Therefore, past QoS parameter performance data is stored in an achievable QoS map, e.g. by mapping an average value of historical QoS parameter measurements (e.g. throughput measurements) to an existing road network. The past performance data of network parameters (hereinafter also referred to as QoS data) is collected by performing and/or collecting repeated measurements on the respective locations of e.g. existing road networks. Therefore, QoS maps are up-to-date coverage maps for WWANs. For each mobile network operator/mobile network provider, at least one QoS map can be maintained in the achievable QoS map module.

The driving data may comprise current positioning data. The current positioning data may comprise a position of the vehicle along a route. Each position may be obtained from navigation satellite systems comprising Global Positioning System (GPS), GLObal Navigation Satellite System (GLONASS), Galileo positioning system, and BeiDou Navigation Satellite System. In particular, each position may be obtained from a respective module located in the vehicle. In the example of the Global Positioning System, each GPS - position that may be determined by a GPS-Module located in the vehicle. In other words, each GPS data may comprise a current GPS-Position of the vehicle. Since the vehicle transmits driving data comprising corresponding GPS-data to the backend-server, the backend-server tracks the position of the vehicle along its route. The GPS-data may comprise further data relevant to/appropriate for calculations with respect to a current GPS-position (e.g. a current speed of the vehicle, a destination of the vehicle, etc.). For any other appropriate positioning data, an appropriate positioning module may be located in the vehicle to determine the positioning data.

It is to be noted that the backend-server receives driving data from a plurality of vehicles located on the road network. Each of the plurality of vehicles may be previously registered at the backend-server.

The appropriate map data may comprise detailed map data/information. The detailed map data/information may comprise map data as is known, e.g., from navigation systems. The detailed map data may comprise further data/information, e.g. data/information on

- moving roadworks,
- a number of lanes,
- positions of

  ○ intersections,
  ○ speed limits,
  ○ traffic signals,
  ○ signs, and/or
  ○ any further appropriate map data/map information

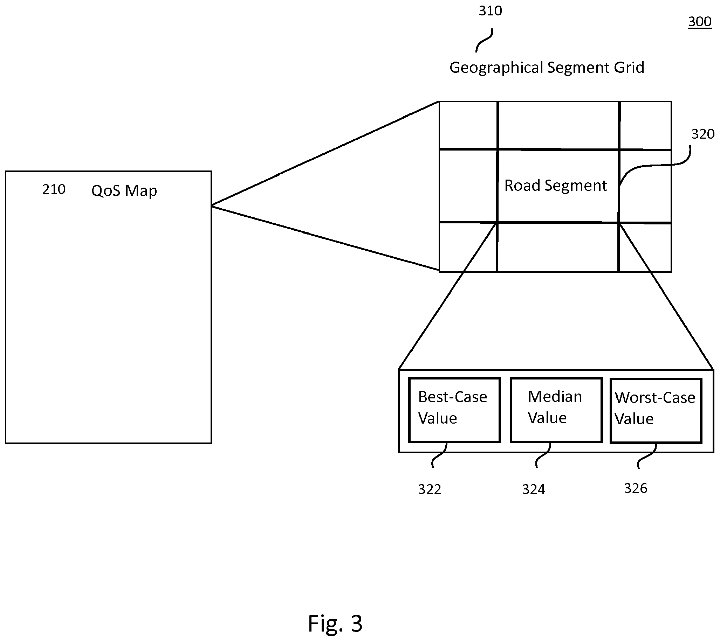

relevant for the potentially fast moving vehicle in route segments into the vehicle will enter subsequently on his route. The route segments are explained in more detail with respect to **Figure 3** below. The backend-server can compute the appropriate map data based on the driving data (e.g. GPS-position) received from the vehicle. The appropriate map data is then downloaded to the vehicle. Based on the appropriate map data, the transmission module of the vehicle controls the vehicle in the autonomous driving mode.

Advantageously, the driver assistance system using the QoS map ensures that the vehicle can continue in its autonomous mode since the scheduling module schedules the download of the appropriate map data to the vehicle based on the transmitted driving data. In particular, the backend-server can accurately anticipate the presence of coverage gaps based on the driving data and using the at least one QoS map using machine learning algorithms to initiate the downloading of appropriate map data in time. For example, the QoS map can be used to obtain appropriate and up-to-date QoS data/information along a route of the vehicle such that the appropriate map data is downloaded to the vehicle in time. The QoS data comprise actual data on QoS parameters (e.g. measured, determined, etc.) Hence, the transmission module can (continue to) control the vehicle in the autonomous driving mode based on the appropriate map data.

According to an embodiment, the vehicle further comprises a sensor module operable to:

- collect and process sensor data from at least one sensor located in the vehicle, and
- transmit the processed sensor data to the control module,

wherein the control module further controls the vehicle in the autonomous driving mode based on the collected sensor data.

For example, the sensor module may be operable to collect sensor data retrieved from at least one sensor. The at least one sensor may comprise

- at least one camera;
- at least a RAdio Detection And Ranging (RADAR) sensor;
- at least one Light Detection And Ranging (LIDAR) sensor;
- at least one photo sensor;
- at least one thermal imaging camera; and/or
- any further appropriate sensors for providing sensor data to the control module and enabling an autonomous driving mode based on the collected sensor data.

In case the collected sensor data need to be previously processed, the sensor module may process the sensor data appropriately.

In the autonomous driving mode, the sensor module may transmit the (processed) sensor data to the control module. The control module is then operable to use the sensor data in addition to the map data to prevent accidents on a current route. For example, the sensors may be operable to detect a shape and/or a position of a road surface and of potential objects/obstacles on the road. The control module may use the sensor data to control the vehicle and to prevent accidents with the detected objects/obstacles (e.g. by steering the vehicle around a detected obstacle, braking to stop the vehicle, etc.).

According to a further embodiment, the driving data further comprises network performance data, wherein the network performance data comprise passive and active network performance data for the at least one mobile network operator. In addition, the QoS map module is further operable to update the at least one up-to-date QoS map based on the received network performance data.

According to a further embodiment, the passive network performance data comprises passive physical layer measurements generated by a vehicle, the physical layer measurements comprising signal-to-interference-plus-noise-ration, SINR.

The SINR is a quantity that can be used to determine theoretical upper bounds on a channel capacity of a communication channel - i.e. a rate of data transfer on the communication channel - in wireless communication networks. In particular, the SINR is defined for a particular user located at some point x in space (e.g. a vehicle). Then, the corresponding SINR in linear scale is given by:

$$SINR(x) = \frac{P}{I+N};$$

where

P = the power of the incoming signal of interest;
I = the interference power of (other) interfering signals in the network;
N = a noise term (e.g. a constant or a random term).

According to a further embodiment, the active network performance data comprise active application layer measurements, the application layer measurements comprising a round trip time, RTT.

The RTT is the amount of time it takes for a signal to be sent from a sender (node A, e.g. client) to a receiver (node B, e.g. server) plus the amount of time it takes for receiving an acknowledgement from the receiver at the sender. In other words, the RTT is the propagation time of a signal traveling from node A to node B plus the processing time at node B plus the propagation time from node B to node A.

Using passive and active network performance data for updating the up-to-date QoS map (in contrast to using passive network performance data only for updating the QoS map, as is conventionally done) has the advantage that the QoS map is more accurate. In particular, the active measurements relate to actual measurements for sending a signal and receiving an acknowledgement while the passive data relates to theoretical channel upper bounds. Hence, the QoS map reflects a more realistic and more accurate achievable QoS capacity as opposed to conventional QoS maps.

According to an embodiment, the backend server is further operable to:

- determine, based on the QoS map, that at least one QoS parameter is insufficient to transmit the appropriate map data from the scheduling module to the vehicle;

- upon determination: trigger a MNO interface module to send an alarm to the mobile network operator, the alarm comprising a notification of the at least one insufficient QoS parameter; and

wherein the mobile network operator is operable to adapt the network configuration such that at least one insufficient QoS parameter is improved and the appropriate map data can be transmitted to the vehicle.

Additionally, the backend-server 120 may comprise a MNO interface module 126 operable to communicate with the MNO 130, e.g. in order to communicate insufficient QoS parameters to the MNO. Further, the backend server may e.g. be aware of a destination of the vehicle because the user entered the destination into a navigation system of the vehicle. Then, the control module may determine a best route to the destination. Upon determination of the best route, the control module may transmit the best route via the transmission module to the backend server. In another example, the destination may be send from the vehicle (e.g. the transmission module) to the backend server and the backend server may determine a best route. Upon receiving/determining the best route, the backend server may determine - e.g. by the QoS map module, the MNO interface module or any other appropriate module located at the backend server - that at least one QoS parameter is insufficient to receive the appropriate map data from the scheduling module. As outlined above, QoS parameters comprise one or more of: bandwidth, latency, throughput, availability, transmission delay, jitter, bit rate, error rates, etc. The determination may be performed by comparing the QoS parameters as stored in the QoS map along the best route with the respective parameters needed to transmit the appropriate map data to the vehicle. Further factors, e.g. a predicted velocity of the vehicle, may be taken into consideration. The determination may indicate that the appropriate map data cannot be scheduled by the scheduling module of the backend server (e.g. because there is no network coverage along 5 km of the best route).

Upon determination that at least one QoS parameter is insufficient, the backend server may send an alarm to the mobile network operator (e.g. by transmitting the alarm to the mobile network operator). The backend server may send the alarm to the MNO via the MNO interface module. The alarm may comprise a corresponding notification of the at least one insufficient QoS parameter. In other words, the alarm may comprise a notification that at least one QoS parameter is insufficient to transmit the appropriate map data to the vehicle. The mobile network operator may - in response to said notification - adapt the network configuration such that at least one insufficient QoS parameter is improved. For example, the mobile network operator may apply one or more respective Self-Organizing Network (SON) algorithms that is appropriate for adapting the network configuration such that at least one insufficient QoS parameter. The SON is an automation technology designed to make the planning, configuration, management, optimization, and healing of mobile radio access networks simpler and faster. For example, one optimization may comprise an automatic switch-off of a percentage of base stations when they are not needed (e.g. during the night hours). The respective neighboring base station(s) would then re-configure their parameters in order to keep the entire area covered by the signal. The alarm received from the backend server may indicate that there is a sudden growth in connectivity demand (since at least one QoS parameter was determined to be insufficient). Hence, the mobile network operator may in response - using the SON - almost instantly "wake up" the "sleeping" base stations. This mechanism leads to significant energy savings for the mobile network operators while the availability of the QoS parameters may be obtained. In response, the mobile network operator may notify (e.g. via the MNO interface module) the backend-server that the QoS parameters were improved. Advantageously, the appropriate map data may then now be transmitted from the backend-server to the vehicle (as scheduled by the scheduling module) and the control module may continue controlling the vehicle in the autonomous driving mode. Advantageously, the vehicle may continue operating in the autonomous driving mode along the best route.

According to yet a further embodiment - if the mobile network operator cannot sufficiently adapt the network configuration such that at least one insufficient QoS parameter is improved - the mobile network operator notifies the MNO interface module at the backend-server respectively,

wherein the backend-server is operable to

- determine a different route along the road network where the QoS map indicates sufficient QoS parameters for transmitting the appropriate map data to the vehicle;
- send the different route to the control module of the vehicle; and

wherein the control module is operable control the vehicle in the autonomous driving mode along the different route.

For example, if no Self-Organizing Network (SON) functionality is available to improve the respective QoS parameters (i.e. the at least one insufficient QoS parameter), the mobile network operator may send an appropriate notification to the backend server (e.g. the MNO interface module of the backend server). The backend server may determine a different, alternative route to the destination of the vehicle where the QoS map indicates sufficient QoS parameters for transmitting the appropriate map data to the vehicle to continue the autonomous driving mode. The backend server may send - e.g. via the transmission module - the different, alternative route to the vehicle, where it may be adapted by the navigation system of the vehicle. Advantageously, the control module may then continue controlling the vehicle in the autonomous driving mode along the different, alternative route.

According to another aspect of the invention, a driver assistance method for improving the reliability and reliability in vehicles operating in an autonomous driving mode is provided. The driver assistance method comprises:

maintaining, by at least one backend-server, at least one up-to-date Quality of Service, QoS, map for at least one mobile network operator in a QoS map module;

scheduling, by a scheduling module of the backend-server, appropriate map data downloads to the vehicle;

transmitting, from a transmission module of a vehicle, driving data to the backend-server in predefined time intervals, the driving data comprising current positioning data of the vehicle;

receiving, at the transmission module of the vehicle, from the scheduling module of the backend-server, the appropriate map data, wherein the scheduling module schedules the appropriate map data downloads based on the transmitted driving data; and

controlling the vehicle in the autonomous driving mode, by a control module, based on the appropriate map data.

According to an embodiment, the driver assistance method further comprises:

collecting and processing, by a sensor module located in the vehicle, sensor data from at least one sensor located in the vehicle, and

transmitting, by the sensor module, the processed sensor data to the control module,

wherein the control module further controls the vehicle in the autonomous driving mode based on the collected sensor data

According to a further embodiment, the driving data further comprises passive and active network performance data for the at least one mobile network operator; and

The QoS map module is further operable to update the at least one up-to-date QoS map based on the received passive and active network performance data.

According to a further embodiment, the passive network performance data comprises passive physical layer measurements generated by a vehicle, the physical layer measurements comprising signal-to-interference-plus-noise-ration, SINR.

According to a further embodiment, the active network performance data comprise active application layer measurements, the application layer measurements comprising a round trip time, RTT.

According to yet a further embodiment, the driver assistance method comprises:

determining, by the backend server, that at least one QoS parameter is insufficient to transmit the appropriate map data to the vehicle, based on the QoS map;

upon determination: sending, by a MNO interface module of the backend server, an alarm to the mobile network operator, MNO, the alarm comprising a notification of the at least one insufficient QoS parameter; and

adapting, by the mobile network operator, the network configuration such that at least one insufficient QoS parameter is improved and the appropriate map data can be transmitted to the vehicle.

According to yet a further embodiment, if the mobile network operator cannot sufficiently adapt the network configuration such that at least one insufficient QoS parameter is improved, the method further comprises:

notifying the MNO interface module of the backend-server, by the mobile network operator, respectively, determining, by the backend-server, a different route along the road network where the QoS map indicates sufficient QoS parameters for transmitting the appropriate map data to the vehicle;

sending the different route from the backend-server to the control module of the vehicle; and

controlling the vehicle, by the control module, in the autonomous driving mode along the different route.

According to yet another aspect of the invention, a vehicle is provided, the vehicle implementing a driver assistance method according to any one of claims 6 to 10.

The aspects defined above and further aspects of the present invention are apparent from the examples of embodiment to be described hereinafter and are explained with reference to the examples of embodiment. The invention will be described in more detail hereinafter wit reference to examples of embodiment. However, it is apparent to the person skilled in the art that the invention is not limited to the examples of embodiment.

**Figure 1**    shows an exemplary driver assistance system for improving the availability and reliability in vehicles operating in an autonomous driving mode;

**Figure 2**    shows an exemplary data exchange between a vehicle and a backend server hosting a QoS map;

**Figure 3**    shows the determination of appropriate map data to be downloaded to the vehicle based on the QoS map.

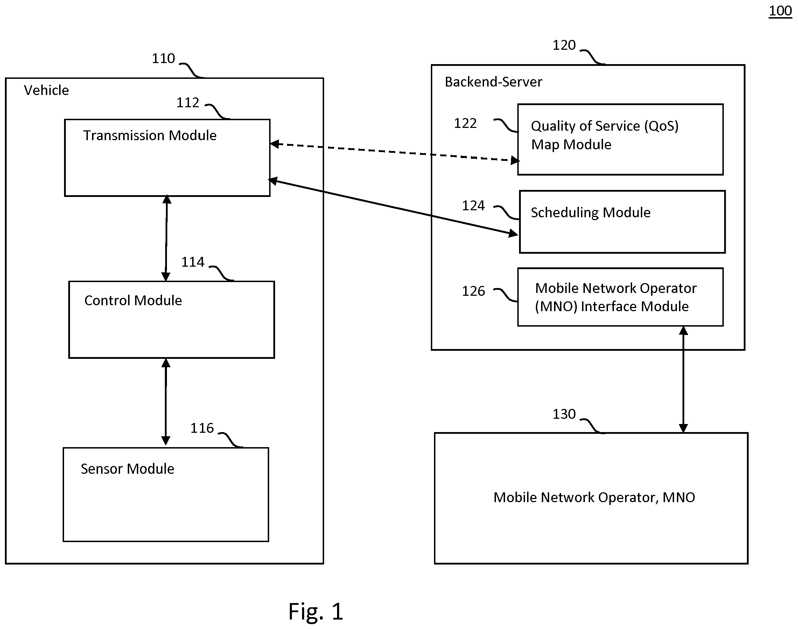

**Figure 1** shows an exemplary driver assistance system 100 for improving the availability and reliability in vehicles 110 operating in an autonomous driving mode. The driver assistance system 100 comprises at least one backend-server 120. The backend-server 120 comprises a QoS map module 122 that maintains at least one up-to-date QoS map 210 for at least one mobile network operator 130. Moreover, the backend-server 120 comprises a scheduling module 124 operable to schedule appropriate map data downloads to the vehicle 110. The scheduling of appropriate map data downloads to the vehicle 110 will be explained in more detail with reference to **Figure 3** below. The backend-server 120 can contain a QoS map 210 for each mobile network operator 130 operating in each country/region of interest (e.g. each European country, each country in the world, etc.). The QoS maps 210 can be appropriately hosted and up-to-date maintained on different backend-servers 120, as appropriate (e.g. a separate backend-server for each country/region of interest hosting an up-to-date QoS map 210 for each mobile network operator 130 operating in the respective country/region). However, the driver assistance system 100 will be explained in the following using one backend-server 120 hosting one QoS map 210 for simplicity reasons.

Further, the driver assistance system 100 comprises at least one vehicle 110. The vehicle 110 comprises a transmission module 112 for transmitting driving data to the backend-server 120 in predefined time intervals. For example, the vehicle 110 may be transmitting driving data to the backend-server 120 whenever the vehicle 110 is driving/in a driving mode on a road. The driving data may be transmitted to the backend-server 120 in time intervals of e.g. every 10 milliseconds, every 50 milliseconds, every second, every 1,5 seconds, every 2 seconds, every 3 seconds or any other appropriate time interval. In order to maintain highly accurate QoS maps 210, a plurality (a large number) of vehicles 110 may be part of the driver assistance system 100 (e.g. by registering by/at the at least one backend-server 120 and transmitting driving data to the backend-server 120, the driving data including the current positioning data (e.g. GPS-data), the passive and the active network performance data as is explained in more detail below). The backend-server 120 can then maintain highly accurate QoS maps 210 based on the driving data received from the plurality of vehicles 110. However, hereinafter, the driver assistance system 100 will be explained in view of one vehicle 110 for simplicity reasons.

The driving data comprises current positioning data of the vehicle 110. The current positioning data may comprise a current position of the vehicle 110 along a route. Each position may be obtained from navigation satellite systems comprising Global Positioning System (GPS), GLObal Navigation Satellite System (GLONASS), Galileo positioning system, and BeiDou Navigation Satellite System. In particular, each position may be obtained from a respective module located in the vehicle.

In the Example of the Global Positioning System, each GPS - position that may be determined by a GPS-Module located in the vehicle. The route may be for example a route entered by a driver of the vehicle 110 into a navigation system of the vehicle 110. Accordingly, the backend-server 120 may track the position of the vehicle 110 along its route. In addition, the driving data may comprise the route entered to/calculated by the driver of the vehicle 110 to the navigation system of the vehicle 110, when applicable. From the route entered to/calculated by the navigation system of the vehicle 110, the backend-server 120 may perform route segmentation, as is described in more detail with respect to **Figure** 3 below. In addition, the current positioning data may comprise further data relevant to/appropriate for calculations with respect to the current position of the vehicle 110 (e.g. a current speed of the vehicle 110, a destination of the vehicle 110, etc.).

The driving data may further comprise network performance data of/for the at least one mobile network operator 130. The network performance data comprise passive and active network performance data for the at least one mobile network operator 130. The passive network performance data comprises passive physical layer measurements generated by the vehicle 110. For example, the physical layer measurements may comprise signal-to-interference-plus-noise-ration, SINR. As outlined above, the SINR is a quantity that can be used to determine theoretical upper bounds on a channel capacity of a communication channel - i.e. a rate of data transfer on the communication channel - in wireless communication networks. In particular, the SINR is defined for a particular user located at some point x in space (e.g. a vehicle). Then, the corresponding SINR in linear scale is given by:

$$SINR(x) = \frac{P}{I+N};$$

where

    P = the power of the incoming signal of interest;
    I = the interference power of (other) interfering signals in the network;
    N = a noise term (e.g. a constant or a random term).

Further, the active network performance data may comprise active application layer measurements, the application layer measurements comprising a round trip time, RTT. The active application layer measurements may be initiated within appropriate time intervals. For example, the vehicle 110 may initiate an RTT every 10 milliseconds, every second, every 1,5 seconds, every 2 seconds, every 3 seconds or any other appropriate time interval. Said time intervals may correspond to the time intervals for transmitting the driving data from the vehicle 110 to the backend-server 120, but need not to do so. However, if the time intervals correspond to each other, the point in time for performing a RTT measurement by the vehicle may be shifted from the point in time for transmitting the driving data to the backend-server 120 such that the RTT measurement is performed and the transmitted with the driving data.

The RTT may be the length of time it takes for a signal to be sent from the vehicle 110 to the backend-server 120 plus the length of time it takes for receiving an acknowledgement from the backend-server 120 at the vehicle 110.

The network performance data may (further) comprise a network coverage of the at least one mobile network operator 130, a current throughput of the at least one mobile network operator 130 at the current position of the vehicle and a latency at the current position of the vehicle and/or any other QoS-parameters (as outlined above).

In addition, the QoS map module 122 updates the at least one up-to-date QoS map 210 based on the received network performance data.

Using network performance data as part of the driving data for updating the up-to-date QoS map 210 (in contrast to e.g. using passive network performance data only for updating the QoS map 210, as is conventionally done) has the advantage that the QoS map 210 reflects the actual achievable QoS achievable QoS for a particular location in the QoS map 210 more accurately. In particular, the active measurements relate to actual measurements for sending a signal and receiving an acknowledgement while the passive data relates to theoretical channel upper bounds. Hence, the QoS map 210 reflects a more realistic and more accurate achievable QoS capacity as opposed to conventional QoS maps.

The transmission module 112 may further receive the appropriate map data from the scheduling module 124 of the backend-server 120 (cf. **Figure 3** below). In particular, the scheduling module 124 schedules the appropriate map data downloads based on the received driving data. The transmission module 112 may send the appropriate map data to the control module 114. Based on the appropriate map data, the control module 114 controls the vehicle 110 in the autonomous driving mode based on the appropriate map data. As outlined above, the appropriate map data may comprise detailed map information. The detailed map information may comprise map data as is known, e.g., from navigation systems, including further data, e.g. data/information on moving roadworks, information on a number of lanes, positions of intersections, speed limits, traffic signals, signs, and/or any further appropriate information. In other words, the detailed map data/information comprises all data/information relevant for maintaining operation of the autonomous driving mode of the vehicle 110 may be moving fast along a route and will be entering e.g. a particular route segment. The route segmentation is explained in more detail with respect to **Figure 3** below. The backend-server 120 can compute the appropriate map data based on the driving data received from the vehicle 110. Based on the appropriate map data received from the backend-server 120, the control module 114 of the vehicle 110 controls the vehicle 110 in the autonomous driving mode.

Advantageously, using the QoS map 210, it can be ensured that the vehicle 110 can continue in an autonomous driving mode since the scheduling module 124 schedules the appropriate map data to the vehicle 110 based on the transmitted driving data. In particular, the backend-server 120 can accurately anticipate the presence of coverage gaps based on the accurate QoS map 210 and the received driving data and using the at least one QoS map 210 using machine learning algorithms to initiate the downloading of appropriate map data to the vehicle 110 in time. For example, the QoS map 210 can be used to obtain appropriate and up-to-date QoS information (e.g. achievable QoS on a route segment the vehicle 110 will enter) along the route of the vehicle 110 such that the appropriate map data can be downloaded to the vehicle 110 in time. Hence, the control module 114 can (continue to) control the vehicle 110 in the autonomous driving mode based on the appropriate map data.

Additionally, the backend-server 120 may comprise a MNO interface module 126 operable to communicate with the MNO 130, e.g. in order to communicate insufficient QoS parameters to the MNO. Further, the control module 114 of the vehicle 110 may be aware of a destination of the vehicle 110 (because the user entered the destination into a navigation system of the vehicle 110). Then, the control module 114 may determine a best route to the destination. Upon determination of the best route, the control module 114 may transmit the best route (e.g. via the transmission module 112) to the backend-server 120. Upon receiving the best route, the backend-server 120 may determine - e.g. via the QoS Map module 122, the MNO interface module 126 or via any other appropriate module located at the backend server 120 - that at least one QoS parameter is insufficient to transmit the appropriate map data to the vehicle 110. As outlined above, the at least one QoS parameter may comprise one or more of: bandwidth, latency, throughput, availability, transmission delay, jitter, bit rate, error rates, etc. The determination may be performed by comparing the QoS parameters as stored by the appropriate part of the QoS map 210 along the best route with the respective parameters needed to receive the appropriate map data. Further factors, e.g. a predicted velocity of the vehicle 110, may be taken into consideration. The determination may indicate that the appropriate map data cannot be scheduled by the scheduling module 124 of the backend server 120 (e.g. since there is no network coverage along 5 km of the best route at all).

Upon determination that at least on QoS parameter is insufficient, the backend server 120 may send, e.g. via the MNO interface module 126, an alarm to the mobile network operator 130. The alarm may comprise a notification of the at least one insufficient parameter. In other words, the notification may indicate that at least one QoS parameter was determined to be insufficient to transmit the appropriate map data to the vehicle 110 (i.e. that said QoS parameter is an insufficient QoS parameter) and hence the control module 114 cannot continue controlling the vehicle 110 in the autonomous driving mode along the best route.

The mobile network operator 130 may in response to receiving the alarm/notification adapt the network configuration such that at least one insufficient QoS parameter is improved. For example, the mobile network operator 130 may apply one or more respective Self-Organizing Network (SON) algorithms. The SON is an automation technology designed to make the planning, configuration, management, optimization, and healing of mobile radio access networks simpler and faster. For example, one optimization may comprise an automatic switch-off of a percent of base stations when they are not needed (e.g. during the night hours). The neighboring base station would then re-configure their parameters in order to keep the entire area covered by the signal. The alarm received from (the MNO interface module 126 of) the backend server 120 may indicate that there is a sudden growth in connectivity demand (since at least one QoS parameter was determined to be insufficient). Hence, the mobile network operator 130 may in response - using the SON - almost instantly "wake up" the "sleeping" base stations. Advantageously, the mobile network operator 130 has significant energy savings for the base stations while the required QoS levels of the QoS parameters are dynamically maintained. In response, the mobile network operator 130 may notify the MNO interface module 126 at the backend-server 120 that the insufficient QoS parameter was improved by means of network reconfiguration. Advantageously, the appropriate map data may then now be transmitted from the backend-server 120 to the vehicle 110 and the control module 114 may continue controlling the vehicle 110 in the autonomous driving mode along the best route.

However, if the mobile network operator 130 cannot sufficiently adapt the network configuration such that at least one insufficient QoS parameter is improved (e.g. since no Self-Organizing Network (SON) functionality is available to improve the respective insufficient QoS parameter), the mobile network operator 130 may send an appropriate notification to the MNO interface module 126 at the backend-server 120. The backend-server 120 may determine a different, alternative route to the destination of the vehicle 110 where the QoS map indicates sufficient QoS parameters to continue the autonomous driving mode (i.e. where the appropriate map data can be transmitted to the vehicle 110 such that the vehicle 110 can be controlled in the autonomous driving mode along the different, alternative route). The backend server may send - e.g. via the transmission module 112 - the different, alternative route to the vehicle 110, where it may be adapted by the navigation system of the vehicle 110. The control module 114 may then continue controlling the vehicle 110 in the autonomous driving mode along the different, alternative route.

The vehicle may further comprises a sensor module 116. The sensor module 116 may collect and process sensor data from at least one sensor (not shown) located in the vehicle 110.

The sensor module 116 may then transmit the processed sensor data to the control module 114. The control module 114 further (i.e. further to the appropriate map data) controls the vehicle 110 in the autonomous driving mode based on the collected sensor data. For example, the sensor module 116 may collect sensor data retrieved from at least one sensor. The at least one sensor may be one or more of the following:

- at least one camera;
- at least a RAdio Detection And Ranging (RADAR) sensor;
- at least one Light Detection And Ranging (LIDAR) sensor;
- at least one photo sensor;
- at least one thermal imaging camera;
- any further appropriate sensors for providing sensor data to the control module 114 and enabling an autonomous driving mode based on the collected sensor data.

In case the collected sensor data need to be previously processed, the sensor module 116 may process the sensor data appropriately. In the autonomous driving mode, the sensor module 116 may transmit the (if applicable: processed) sensor data to the control module 114. The control module 114 is then operable to use the sensor data in addition to the appropriate map data (as received from the backend-server) to prevent accidents on a current route. In particular, the sensors may be operable to detect a shape and/or a position of a road surface and of potential objects/obstacles on the road. The control module 114 can use the sensor data to control the vehicle 110 by e.g. preventing accidents with the detected objects/obstacles (e.g. by steering the vehicle around a detected obstacle, braking to stop the vehicle, etc.). In addition, the control module 114 may send the sensor data (e.g. via the transmission module 112 as part of the driving data) to the backend-server 120. The backend-server 120 may use the sensor data appropriately, e.g. to warn other vehicles 110 entering the respective road segment from detected objects/obstacles. The transmission module 112 and the control module 114 may be realized by one control unit providing the respective functionality. In another example, the transmission module 112 and the control module 114 may be realized by separate control units, each providing the respective functionalities.

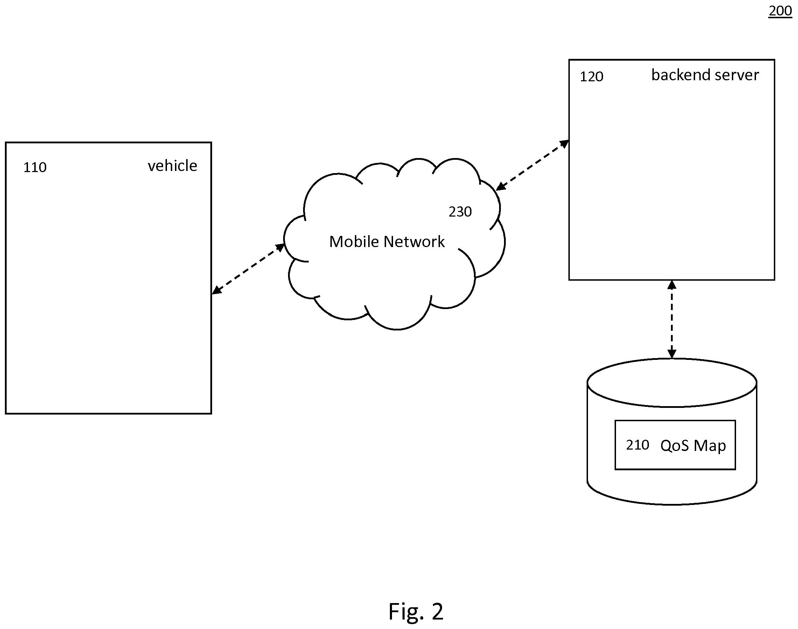

Figure 2 shows an exemplary data exchange between the vehicle 110 and the backend server 120 hosting the QoS map 210 as explained with reference to Figure 1 above. In particular, the vehicle 110 sends the driving data via the mobile network 230 of the mobile (network) operator to the backend server 120. As outlined above, the backend-server 120 is operable to receive driving data from a plurality of vehicles. The backend-server 120 hosts the up-to-date QoS map 210 of the mobile network operator 130. Moreover, the backend-server 120 updates the QoS map 210 in predetermined, appropriate time intervals. Moreover, based on the positioning data (e.g. GPS-position) received by the vehicle 110, the backend-server 120 sends the appropriate map data via the mobile network 230 to the vehicle 110. It is noted that the backend-server 120 may not send appropriate map data to the vehicle 110. This may e.g. be the case if the vehicle does not support any autonomous driving mode and/or if the vehicle 110 indicated with the driving data that it will not use the autonomous driving mode.

Figure 3 shows the determination of appropriate map data to be downloaded to the vehicle 110 (as outlined with reference to Figure 1 above) based on the QoS map 210. In particular, the backend-server 120 can receive (e.g. with the driving data) the vehicle route, e.g. from the navigation system. Then, the backend-server 120 may divide the vehicle route into a plurality of road segments (in the following also referred to as segments) 320. Each segment 320 of the vehicle route (in the following also referred to as route) may have a length of a predetermined number of kilometers (km), e.g. 0,5 km, 1km, 2km, 5km, 10km or any other appropriate predetermined number of kilometers (or e.g. miles). Using the up-to-date QoS map 210, the backend-server 120 is able to anticipate the presence of a coverage gap for each of the road segments (the route was divided into), if there is/are any coverage gaps. In particular, by consulting the data stored in the up-to-date QoS map 210, the backend-server can determine that one or more segments on the vehicle route are located on/correspond to a coverage gap (mobile network coverage gap of the mobile network operator). The presence of each coverage gap means that so that the corresponding mobile network cell does not provide sufficient resources for downloading the appropriate map data on the respective segments.

For example, an average mobile communication QoS on a first segment at the time of the vehicle 110 arriving on the first segment is 1 megabits per second (Mbps). Now assuming that the appropriate map data that needs to be downloaded from the backend-server 120 to the vehicle 110 for the identified segment with no network coverage has a size of 1 Megabyte (MB), the scheduling module 124 of the backend-server 120 may schedule the download of the appropriate map data for the identified segment with no network coverage e.g. at least 8 seconds (optionally plus additional time in advance depending on a relevance of the appropriate map data) before the arrival of the vehicle 110 at the identified road segment with no network coverage. Optionally, at the same time, a clearance for the autonomous driving mode of the vehicle 110 within the identified segment without network coverage may be sent to vehicle 110. The clearance for the autonomous driving mode may be sent after downloading the appropriate map data and before entering the identified segment with the coverage gap. Advantageously, the vehicle 110 may hence - due to the appropriate map data and optionally the clearance received from the backend-server 120 - (continue to) drive in the autonomous mode even when entering and passing the identified segment with the coverage gap.

Moreover, the QoS map 210 may further store uncertainty values for QoS-data, e.g. for the achievable throughput, at each road segment 320, e.g. a best-case value 322, a median value 324 and/or a worst-case value 326. The uncertainty values 322, 324, 326 may be considered for starting the download of the appropriate map data.

For example, if a throughput of 1 Mbps in the previous example represents the median value 324, i.e. a median of measurements being performed by a plurality of vehicles 110 at the road segment 210, a more conservative value, e.g. the worst-case value 326 e.g. representing the lowest throughput measurement, can be chosen by the backend-server 120 for scheduling the appropriate map data download (by the scheduling module 124). In this manner, a value of 500 Kbps (representing the worst-case value 326 for the respective road segment 320) can be used instead of 1 Mbps (representing the median value 324 for said road segment 320). The value of 500 Kbps could be considered for scheduling the appropriate map data download by the scheduling module 124, e.g. at least 16 seconds before the vehicle enters the identified road segment with the coverage gap. The best-case value 322 may represent the best throughput measurement for the road segment 320.

As outlined above, the underlying concept of the driver assistance system and method can be used to enable using an autonomous driving mode not only for a single vehicle 110 but also for a plurality - e.g. a fleet - of vehicles 110 while managing a plurality of services over the mobile communications network of the vehicles 110. Therefore, driving data of all vehicles 110 (e.g. located in a certain area and/or belonging to a fleet and previously registered with a service provider corresponding to the backend-server 120) may aggregated and merged in the QoS map 210.

In addition, actuality and priority of the requested services over the mobile communications network (including the service of downloading appropriate map data for the autonomous driving mode of vehicles as explained with reference to Figures 1 to 3 above) of all vehicles 110 may be analyzed and jointly processed. Using appropriate machine learning algorithms, an overall Quality of Service (QoS) optimization for all services may be performed and supervised by the backend-server 120 using the up-to-date QoS map 210 while maintaining the autonomous driving mode might have the highest priority. In particular, the backend-server 120 may assign individual service execution strategies to each of the plurality of vehicles 110.

The previously introduced concept makes use of the parent view' of the backend-server 120 on the overall QoS data transmission scenario. For example, consider two vehicles 110 using the same mobile network operator driving towards a road segment 320 which features weak network coverage, which is identified by inspecting the QoS map 210 hosted by the backend-server 120. A first vehicle 110 may be running an entertainment service (e.g. video streaming), whereas a second vehicle 110 may be operating in the autonomous driving mode. When approaching to the road segment 320 with weak network coverage, a certain data rate has to be critically ensured for the second vehicle 110 such that the second vehicle 110 can continue operation in the autonomous driving mode. Therefore, the video-streaming-service of the first vehicle 110 may be shut off or lowered in data rate (triggered by the backend-server 120) to enable the second vehicle 110 to continue operation in the autonomous driving mode with seamless and performant connectivity.

The backend-server 120 may maintain a prioritization table. The prioritization table may further comprise QoS requirements (e.g. throughput requirements) of each service that may be running on a head unit and consuming mobile network resources. Depending on the necessary latency or buffering possibility according to the QoS map, the backend-server can trigger a service downgrade or shut-off as illustrated in the previous example, since maintaining the autonomous driving mode is assigned with the highest priority in the prioritization table. In other words, the backend-server 120 is further operable to perform backend-assisted application management to support vehicles 110 to operate in an autonomous driving mode.

Advantageously, a percentage of time in which vehicles can be operating in an autonomous driving mode is increased while their proper operation is ensured. In particular, by exploiting data stored in up-to-date QoS maps 210 comprising network performance data (based on the driving data received from the vehicles 110), the vehicles 110 can continue operating in the autonomous driving mode for a longer period of time since they can drive on road segments where no or only low network coverage is provided. Furthermore, the driver assistance system 100 can be used for data traffic optimization, if multiple vehicles 210 supporting an autonomous driving mode are considered jointly for simultaneous data transfer. This procedure is controlled by the backend-server 120 operating as an information aggregator and data traffic balancer.

It is noted that the up-to-date QoS map 210 might also be located in the vehicle 110 and the downloading of the driving data could then be scheduled by a scheduling module located in the vehicle 110 instead of the backend-server 120.

## Claims

**1.** Driver assistance system (100) for improving the availability and reliability of autonomous driving modes of vehicles (110) capable of operating in an autonomous driving mode, the driver assistance system (100) comprising:

at least one backend-server (120), the backend-server comprising:

- a Quality of Service, QoS, map module (122) operable to maintain at least one up-to-date QoS map (210) for at least one mobile network operator, MNO (130), the QoS map (210) being indicative of a QoS or coverage of a Wireless Wide Area Network WWAN; and
- a scheduling module (124) operable to schedule appropriate map data downloads to the vehicle (110); and

at least one vehicle (110), the vehicle (110) comprising:

- a transmission module (112) operable to:

- transmit driving data to the backend-server (120) in predefined time intervals, the driving data comprising positioning data of the vehicle (110); and
- receive, from the scheduling module (124) the appropriate map data, wherein the scheduling module (124) schedules the appropriate map data downloads based on the transmitted driving data; and

- a control module (114) operable to control the vehicle (110) in the autonomous driving mode based on the appropriate map data.

**2.** Driver assistance system (100) according to claim 1, wherein the vehicle (110) further comprises a sensor module (116) operable to:

- collect and process sensor data from at least one sensor located in the vehicle (110), and
- transmit the processed sensor data to the control module (114), wherein the control module (114) further controls the vehicle (110) in the autonomous driving mode based on the collected sensor data.

**3.** Driver assistance system (100) according to any one of the preceding claims, wherein the driving data further comprises network performance data, wherein the network performance data comprise passive and active network performance data for the at least one MNO (130); and wherein the QoS map module (122) is further operable to update the at least one up-to-date QoS map (210) based on the received network performance data.

4. Driver assistance system (100) according to claim 3, wherein the passive network performance data comprises passive physical layer measurements generated by a vehicle, the physical layer measurements comprising signal-to-interference-plus-noise-ration, SINR.

5. Driver assistance system (100) according to claim 3 or claim 4, wherein the active network performance data comprise active application layer measurements, the application layer measurements comprising a round trip time, RTT.

6. Driver assistance system (100) according to any one of the preceding claims, wherein the backend server (120) is further operable to:

- determine, based on the QoS map (210), that at least one QoS parameter is insufficient to transmit the appropriate map data from the scheduling module (124) to the vehicle (110);
- upon determination: trigger an MNO interface module (126) to send an alarm to the MNO (130), the alarm comprising a notification of the at least one insufficient QoS parameter; and

wherein the MNO (130) is operable to adapt the network configuration such that at least one insufficient QoS parameter is improved and the appropriate map data can be transmitted to the vehicle (110).

7. Driver assistance system (100) according to claim 6, wherein - if the MNO (130) cannot sufficiently adapt the network configuration such that at least one insufficient QoS parameter is improved -the MNO (130) notifies the MNO interface module (126) of the backend-server (120) respectively, wherein the backend-server (120) is operable to:

- determine a different route along the road network where the QoS map (210) indicates sufficient QoS parameters for transmitting the appropriate map data to the vehicle (110);
- send the different route to the control module (114) of the vehicle (110); and

wherein the control module (110) is operable control the vehicle (110) in the autonomous driving mode along the different route.

8. Driver assistance method for improving the availability and reliability of autonomous driving modes of vehicles (110) capable of operating in an autonomous driving mode, the driver assistance method comprising:

maintaining, by at least one backend-server (120), at least one up-to-date Quality of Services, QoS, map (210) for at least one mobile network operator, MNO, (130) in a QoS map module (122), the QoS map (210) being indicative of a QoS or coverage of a Wireless Wide Area Network WWAN;
scheduling, by a scheduling module (124) located in the backend-server (120), appropriate map data downloads to the vehicle (110);
transmitting, from a transmission module (112) of a vehicle (110), driving data to the backend-server (120) in predefined time intervals, the driving data comprising positioning data of the vehicle (110);
receiving, at the transmission module (112) of the vehicle (110), from the scheduling module (124), the appropriate map data, wherein the scheduling module (124) schedules the appropriate map data downloads based on the transmitted driving data; and
controlling the vehicle (110) in the autonomous driving mode, by a control module (114), based on the appropriate map data.

9. Driver assistance method according to claim 8, further comprising:

collecting and processing, by a sensor module (116) located in the vehicle (110), sensor data from at least one sensor located in the vehicle (110), and
transmitting, by the sensor module (116), the processed sensor data to the control module (114),
wherein the control module (114) further controls the vehicle (110) in the autonomous driving mode based on the collected sensor data.

10. Driver assistance method according to any of claims 8 or 9, wherein the driving data further comprises network performance data, the network performance data comprising passive and active network performance data for the at least one MNO (130); and wherein QoS map module (122) is further operable to update the at least one up-to-date QoS map (210) based on the received network performance data.

11. Driver assistance method according to claim 10, wherein the passive network performance data comprises passive physical layer measurements generated by a vehicle, the physical layer measurements comprising signal-to-interference-plus-noise-ration, SINR.

12. Driver assistance method according to claim 10 or claim 11, wherein the active network performance data comprise active application layer measurements, the application layer measurements comprising a round trip time, RTT.

13. Driver assistance method according to any one of claims 8 to 12, further comprising:

   determining, by the backend server (120), that at least one QoS parameter is insufficient to transmit the appropriate map data to the vehicle (110), based on the QoS map (210); upon determination: sending, by an MNO interface module (126) at the backend server (120), an alarm to the MNO (130), the alarm comprising a notification of the at least one insufficient QoS parameter; and

   adapting, by the MNO (130), the network configuration such that at least one insufficient QoS parameter such that the appropriate map data can be transmitted to the vehicle (110).

14. Driver assistance method according to claim 13, wherein - if the MNO (130) cannot sufficiently adapt the network configuration to improve at least one insufficient QoS parameter - the method further comprises:

   notifying the MNO interface module (126) of the backend-server (120), by the MNO (130), respectively,

   determining, by the backend-server (120), a different route along the road network where the QoS map (210) indicates sufficient QoS parameters for transmitting the appropriate map data to the vehicle (110);

   sending the different route from the backend-server (120) to the control module (114) of the vehicle (110); and

   controlling the vehicle (110), by the control module (110), in the autonomous driving mode along the different route.

15. Vehicle (110) implementing a driver assistance method according to any one of claims 8 to 14.

**Patentansprüche**

1. Fahrerassistenzsystem (100) zum Verbessern der Verfügbarkeit und Zuverlässigkeit von autonomen Fahrmodi von Fahrzeugen (110), die in einem autonomen Fahrmodus betrieben werden können, wobei das Fahrerassistenzsystem (100) aufweist:

   mindestens einen Backend-Server (120), wobei der Backend-Server aufweist:

   - ein Dienstgüte-Kartenmodul, QoS, (122), das mindestens eine aktuelle QoS-Karte (210) für mindestens einen Mobilfunknetzbetreiber, MNO, (130) pflegen kann, wobei die QoS-Karte (210) eine QoS oder Reichweite eines drahtlosen Weitverkehrsnetzes (Wireless Wide Area Network) WWAN anzeigt; und

   - ein Planungsmodul (124), das geeignete Kartendaten-Downloads zum Fahrzeug (110) planen kann; und

   mindestens ein Fahrzeug (110), wobei das Fahrzeug (110) aufweist:

   - ein Übertragungsmodul (112), das:

      - in vordefinierten Zeitintervallen Fahrdaten an den Backend-Server (120) übertragen kann, wobei die Fahrdaten Positionsdaten des Fahrzeugs (110) enthalten; und

      - vom Planungsmodul (124) die geeigneten Kartendaten empfangen kann, wobei das Planungsmodul (124) basierend auf den übertragenen Fahrdaten die geeigneten Kartendaten-Downloads plant; und

      - ein Steuermodul (114), das das Fahrzeug (110) basierend auf den geeigneten Kartendaten im autonomen Fahrmodus steuern kann.

2. Fahrerassistenzsystem (100) nach Anspruch 1, wobei das Fahrzeug (110) außerdem ein Sensormodul (116) aufweist, das:

   - Sensordaten von mindestens einem im Fahrzeug (110) angeordneten Sensor sammeln und verarbeiten kann, und

   - die verarbeiteten Sensordaten an das Steuermodul (114) übertragen kann, wobei das Steuermodul (114) weiter das Fahrzeug (110) basierend auf den gesammelten Sensordaten im autonomen Fahrmodus steuert.

3. Fahrerassistenzsystem (100) nach einem der vorhergehenden Ansprüche, wobei die Fahrdaten weiter Netzwerkleistungsdaten enthalten, wobei die Netzwerkleistungsdaten passive und aktive Netzwerkleistungsdaten für den mindestens einen MNO (130) enthalten; und

   wobei das QoS-Kartenmodul (122) weiter basierend auf den empfangenen Netzwerkleistungsdaten die mindestens eine aktuelle QoS-Karte (210) aktualisieren kann.

**4.** Fahrerassistenzsystem (100) nach Anspruch 3, wobei die passiven Netzwerkleistungsdaten von einem Fahrzeug generierte passive Bitübertragungsschicht-Messwerte enthalten, wobei die Bitübertragungsschicht-Messwerte Signal-Interferenz-plus-Rausch-Verhältnisse, SINR, enthalten.

**5.** Fahrerassistenzsystem (100) nach Anspruch 3 oder Anspruch 4, wobei die aktiven Netzwerkleistungsdaten aktive Anwendungsschicht-Messwerte enthalten, wobei die Anwendungsschicht-Messwerte eine Umlaufzeit, RTT, enthalten.

**6.** Fahrerassistenzsystem (100) nach einem der vorhergehenden Ansprüche, wobei der Backend-Server (120) weiter:

- basierend auf der QoS-Karte (210) bestimmen kann, dass mindestens ein QoS-Parameter unzureichend ist, um die geeigneten Kartendaten vom Planungsmodul (124) an das Fahrzeug (110) zu übertragen;
- nach der Bestimmung: ein MNO-Schnittstellenmodul (126) veranlassen kann, einen Alarm an den MNO (130) zu senden, wobei der Alarm eine Mitteilung des mindestens einen unzureichenden QoS-Parameters enthält; und

wobei der MNO (130) die Netzkonfiguration so anpassen kann, dass mindestens ein unzureichender QoS-Parameter verbessert wird und die geeigneten Kartendaten an das Fahrzeug (110) übertragen werden können.

**7.** Fahrerassistenzsystem (100) nach Anspruch 6, wobei - wenn der MNO (130) die Netzkonfiguration nicht genügend anpassen kann, damit mindestens ein unzureichender QoS-Parameter verbessert wird - der MNO (130) das MNO-Schnittstellenmodul (126) des Backend-Servers (120) dementsprechend benachrichtigt, wobei der Backend-Server (120):

- eine andere Strecke entlang des Straßennetzes bestimmen kann, wo die QoS-Karte (210) genügend QoS-Parameter zur Übertragung der geeigneten Kartendaten an das Fahrzeug (110) anzeigt;
- die andere Strecke an das Steuermodul (114) des Fahrzeugs (110) senden kann; und

wobei das Steuermodul (110) das Fahrzeug (110) im autonomen Fahrmodus entlang der anderen Strecke steuern kann.

**8.** Fahrerassistenzverfahren zum Verbessern der Verfügbarkeit und Zuverlässigkeit von autonomen Fahrmodi von Fahrzeugen (110), die in einem autonomen Fahrmodus betrieben werden können, wobei das Fahrerassistenzverfahren aufweist:

Pflege, durch mindestens einen Backend-Server (120), mindestens einer aktuellen Dienstgüte-QoS-Karte (210) für mindestens einen Mobilfunknetzbetreiber, MNO, (130) in einem QoS-Kartenmodul (122), wobei die QoS-Karte (210) eine QoS oder Reichweite eines drahtlosen Weitverkehrsnetzes (Wireless Wide Area Network) WWAN anzeigt;
Planung, durch ein im Backend-Server (120) befindliches Planungsmodul (124), von geeigneten Kartendaten-Downloads zum Fahrzeug (110);
Übertragung, von einem Übertragungsmodul (112) eines Fahrzeugs (110), von Fahrdaten an den Backend-Server (120) in vordefinierten Zeitintervallen, wobei die Fahrdaten Positionsdaten des Fahrzeugs (110) enthalten;
Empfang der geeigneten Kartendaten vom Planungsmodul (124) am Übertragungsmodul (112) des Fahrzeugs (110), wobei das Planungsmodul (124) die geeigneten Kartendaten-Downloads basierend auf den übertragenen Fahrdaten plant; und
Steuern des Fahrzeugs (110) im autonomen Fahrmodus, durch ein Steuermodul (114), basierend auf den geeigneten Kartendaten.

**9.** Fahrerassistenzverfahren nach Anspruch 8, das weiter aufweist:

Sammeln und Verarbeiten, durch ein im Fahrzeug (110) befindliches Sensormodul (116), von Sensordaten von mindestens einem im Fahrzeug (110) angeordneten Sensor, und
Übertragen, durch das Sensormodul (116), der verarbeiteten Sensordaten an das Steuermodul (114),
wobei das Steuermodul (114) weiter das Fahrzeug (110) basierend auf den gesammelten Sensordaten im autonomen Fahrmodus steuert.

**10.** Fahrerassistenzverfahren nach einem der Ansprüche 8 oder 9, wobei die Fahrdaten weiter Netzwerkleistungsdaten enthalten, wobei die Netzwerkleistungsdaten passive und aktive Netzwerkleistungsdaten für den mindestens einen MNO (130) enthalten; und wobei das QoS-Kartenmodul (122) weiter basierend auf den empfangenen Netzwerkleistungsdaten die mindestens eine aktuelle QoS-Karte (210) aktualisieren kann.

**11.** Fahrerassistenzverfahren nach Anspruch 10, wobei die passiven Netzwerkleistungsdaten von einem Fahrzeug generierte passive Bitübertragungsschicht-Messwerte enthalten, wobei die Bitübertragungsschicht-Messwerte Signal-Interferenz-plus-Rausch-Verhältnisse, SINR, enthalten.

12. Fahrerassistenzverfahren nach Anspruch 10 oder Anspruch 11, wobei die aktiven Netzwerkleistungsdaten aktive Anwendungsschicht-Messwerte enthalten, wobei die Anwendungsschicht-Messwerte eine Umlaufzeit, RTT, enthalten.

13. Fahrerassistenzverfahren nach einem der Ansprüche 8 bis 12, das weiter aufweist:

Bestimmung, durch den Backend-Server (120), dass mindestens ein QoS-Parameter unzureichend ist, um die geeigneten Kartendaten an das Fahrzeug (110) zu übertragen, basierend auf der QoS-Karte (210);
nach der Bestimmung: Senden, durch ein MNO-Schnittstellenmodul (126) am Backend-Server (120), eines Alarms an den MNO (130), wobei der Alarm eine Mitteilung des mindestens einen unzureichenden QoS-Parameters enthält; und Anpassung, durch den MNO (130), der Netzkonfiguration derart, dass mindestens ein unzureichender QoS-Parameter derart, dass die geeigneten Kartendaten an das Fahrzeug (110) übertragen werden können.

14. Fahrerassistenzverfahren nach Anspruch 13, wobei - wenn der MNO (130) die Netzkonfiguration nicht genügend anpassen kann, um mindestens einen unzureichenden QoS-Parameter zu verbessern - das Verfahren weiter aufweist:

dementsprechendes Benachrichtigen des MNO-Schnittstellenmoduls (126) des Backend-Servers (120) durch den MNO (130),
Bestimmen, durch den Backend-Server (120), einer anderen Strecke entlang des Straßennetzes, wo die QoS-Karte (210) genügend QoS-Parameter zur Übertragung der geeigneten Kartendaten an das Fahrzeug (110) anzeigt;
Senden der anderen Strecke vom Backend-Server (120) an das Steuermodul (114) des Fahrzeugs (110); und
Steuern des Fahrzeugs (110), durch das Steuermodul (110), im autonomen Fahrmodus entlang der anderen Strecke.

15. Fahrzeug (110), das ein Fahrerassistenzverfahren nach einem der Ansprüche 8 bis 14 implementiert.

**Revendications**

1. Système d'assistance d'un conducteur (100) permettant d'améliorer la disponibilité et la fiabilité de modes de conduite autonome de véhicules (110) susceptibles de fonctionner selon un mode de conduite autonome, ce système d'assistance (100) comprenant :

au moins un serveur principal (120), ce serveur comprenant :

- un module de carte de qualité de service QoS, (122) susceptible de maintenir la mise à jour d'au moins une carte QoS récente (210) pour au moins un opérateur de réseau mobile MNO (130), la carte QoS (210) indiquant une QoS ou une couverture d'un réseau étendu sans fil WWAN, et
- un module de programmation (124) susceptible de programmer des données cartographiques appropriées, téléchargées vers le véhicule (110), et

au moins un véhicule (110), ce véhicule (110) comprenant :

- un module de transmission (112) susceptible,

- de transmettre des données de conduite au serveur principal (120) dans des intervalles de temps prédéfinis, les données de conduite comprenant des données de positionnement du véhicule (110), et
- de recevoir à partir du module de programmation (124) les données cartographiques appropriées, le module de programmation (124) programmant les données cartographiques appropriées téléchargées sur le fondement des données de conduite transmises, et

- un module de commande (114) susceptible de commander le véhicule (110) dans le mode de conduite autonome sur le fondement des données cartographiques appropriées.

2. Système d'assistance d'un conducteur (100), conforme à la revendication 1,
dans lequel,
le véhicule (110) comporte en outre un module de capteur (116) susceptible :

- de recueillir et de traiter des données de capteur provenant d'au moins un capteur situé dans le véhicule (110), et
- de transmettre les données de capteur traitées au module de commande (114), le module de commande (114) commandant en outre le véhicule (110) dans le mode de conduite autonome sur le fondement des données de capteur recueillies.

3. Système d'assistance d'un conducteur (100) conforme à l'une quelconque des revendications précédentes,
dans lequel,
les données de conduite comportent en outre des données de performance de réseau,
les données de performance de réseau comprenant des données de performance de réseau actives et des données de performance de réseau passives pour le MNO (130), et
le module de carte QoS (122) étant en outre susceptible de mettre à jour la carte QoS récente (210) sur le fondement des données de performance de réseau reçues.

4. Système d'assistance d'un conducteur (100), conforme à la revendication 3,
dans lequel,
les données de performance de réseau passives comprennent des mesures de couche physique passives générées par un véhicule, les mesures de couche physique comprenant le rapport signal / interférence plus bruit SINR.

5. Système d'assistance d'un conducteur (100), conforme à la revendication 3 ou 4,
dans lequel,
les données de performance de réseau actives comprennent des mesures de couche d'application actives, les mesures de couche d'application comprenant le temps de parcours RTT.

6. Système d'assistance d'un conducteur (100) conforme à l'une quelconque des revendications précédentes,
dans lequel,
le serveur principal (120) est en outre susceptible :

- de déterminer sur le fondement de la carte QoS (210) qu'au moins un paramètre QoS est insuffisant pour transmettre les données cartographiques appropriées du module de programmation (124) au véhicule (110),
- lors de cette détermination de déclencher l'envoi par un module d'interface MNO (126) d'une alarme au MNO (130), cette alarme comprenant la notification de l'insuffisance du paramètre QoS, et

le MNO (130) étant susceptible d'adapter la configuration du réseau de sorte qu'au moins un paramètre QoS insuffisant soit amélioré et que les données cartographiques appropriées puissent être transmises au véhicule (110).

7. Système d'assistance d'un conducteur (100), conforme à la revendication 6,
dans lequel,

- si le MNO (130) ne peut pas adapter de manière suffisante la configuration du réseau de sorte qu'au moins un paramètre QoS insuffisant soit amélioré, le MNO (130) le notifie respectivement, au module de d'interface de MNO (126) du serveur principal (120),

le serveur principal (120) étant susceptible :

- de déterminer une route différente le long du réseau routier dans laquelle la carte QoS (210) indique des paramètres QoS suffisants pour transmettre les données cartographiques appropriées au véhicule (110),
- de transmettre la route différente au module de commande (114) du véhicule (110), et
- le module de commande (110) étant susceptible de commander le véhicule (110) selon le mode de conduite autonome le long de la route différente.

8. Procédé d'assistance d'un conducteur permettant d'améliorer la disponibilité et la fiabilité de modes de conduite autonome de véhicules (110) susceptible de fonctionner selon un mode de commande autonome, ce procédé d'assistance comprenant des étapes consistant à :

maintenir par au moins un serveur principal (120), la mise à jour d'au moins une carte de qualité de service QoS récente (210) pour au moins un opérateur de réseau mobile MNO (130) dans un module de cartographie QoS (122), la carte QoS (210) indiquant une QoS ou une couverture d'un réseau WWAN,
programmer par un module de programmation (124) situé dans le serveur principal (120) des données cartographiques appropriées, téléchargées vers le véhicule (110),
transmettre à partir d'un module de transmission (112) d'un véhicule (110) des données de conduite au serveur principal (120) dans des intervalles de temps prédéfinies, les données de conduite comprenant des données de positionnement du véhicule (110),
recevoir, sur le module de transmission (112) du véhicule (110) à partir du module de programmation (124) les données cartographiques appropriées, le module de programmation (124) programmant les données cartographiques appropriées téléchargées sur le fondement des données de conduite transmises, et
commander le véhicule (110) dans le mode de conduite autonome par un module de commande (114) sur le fondement des données cartographiques appropriées.

9. Procédé d'assistance d'un conducteur, conforme à la revendication 8,
comprenant en outre des étapes consistant à :

recueillir et traiter par un module de capteur (116) situé dans le véhicule (110) des données de capteur provenant d'au moins un capteur situé dans le véhicule (110), et
transmettre par le module de capteur (116) les données de capteur traitées au module de commande (114),
le module de commande (114) comandant en outre le véhicule (110) dans le mode de conduite autonome sur le fondement des données de capteur recueillies.

10. Procédé d'assistance d'un conducteur conforme à l'une quelconque des revendications 8 et 9,
selon lequel,
les données de conduite comportent en outre des données de performance de réseau,
les données de performance de réseau, comprenant des données de performance de réseau passives et des données de performance de réseau actives pour le MNO (130), et
le module de carte QoS (122) étant en outre susceptible de mettre à jour la carte QoS récente (210) sur le fondement des données de performance de réseau reçues.

11. Procédé d'assistance d'un conducteur, conforme à la revendication 10,
selon lequel,
les données de performance de réseau passives comportent des mesures de couche physique passives générées par un véhicule, les mesures de couche physique comprenant le rapport signal / interférence plus bruit SINR.

12. Procédé d'assistance d'un conducteur conforme à la revendication 10 ou 11, selon lequel,
les données de performance de réseau actives comprennent des mesures de couche d'application actives, les mesures de couche d'application comprenant le temps de parcours RTT.

13. Procédé d'assistance d'un conducteur, conforme à l'une quelconque des revendications 8 à 12,
comprenant en outre des étapes consistant à :

déterminer par le serveur principal (120) qu'au moins un paramètre QoS est insuffisant pour transmettre les données cartographiques appropriées au véhicule (110) sur le fondement de la carte QoS (210),

lors de cette détermination, transmettre par un module d'interface MNO (126) au serveur principal (120) une alarme au MNO (130), cette alarme comprenant la notification de l'insuffisance du paramètre QoS, et
adapter par la MNO (130) la configuration du réseau de sorte qu'au moins un paramètre QoS insuffisant soit amélioré et que les données cartographiques appropriées puissent être transmises au véhicule (110).

14. Procédé d'assistance d'un conducteur, conforme à la revendication 13,
selon lequel,

- si la MNO (130) ne peut pas adapter de manière suffisante la configuration du réseau pour améliorer au moins un paramètre QoS insuffisant - le procédé comporte en outre des étapes consistant à :

le notifier respectivement au module d'interface MNO (126) du serveur principal (120) par la MNO (130),
déterminer par le serveur principal (120) une route différente le long du réseau routier dans laquelle la carte QoS (210) indique des paramètres QoS suffisants pour transmettre les données cartographiques appropriées au véhicule (110),
transmettre la route différente à partir du serveur principal (120) au module de commande (114) du véhicule (110), et
commander le véhicule (110) par le module de commande (114) selon mode de conduite autonome le long de la route différente.

15. Véhicule (110) mettant en oeuvre un procédé d'assistance d'un conducteur conforme à l'une quelconque des revendications 8 à 14.

Fig. 1

200

backend server

120

210 QoS Map

230

Mobile Network

vehicle

110

Fig. 2

310

300

Geographical Segment Grid

| | | |
|---|---|---|
| | Road Segment | |
| | | |

320

210    QoS Map

| Best-Case Value | Median Value | Worst-Case Value |
|---|---|---|

322          324          326

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 9057620 B2